# EUROPEAN PATENT APPLICATION

(11) **EP 4 668 454 A1**
(43) Date of publication of application: **24.12.2025**
(21) Application number: 24891880.7
(22) Date of filing: 14.11.2024
(51) Int. Cl.: H01M 50/383, H01M 50/358, H01M 50/258, H01M 50/308, H01M 50/249, H01M 50/271, H01M 50/375, H01M 50/317, H01M 50/367

(54) **BATTERY PACK AND VEHICLE INCLUDING SAME**

(30) Priority: 17.11.2023 KR 20230159748; 23.10.2024 KR 20240145821
(71) Applicant: LG Energy Solution, Ltd., Seoul 07335 (KR)
(72) Inventor: LEE, Jung-Hoon, Daejeon 34122 (KR); KIM, Soo-Youl, Daejeon 34122 (KR); JUNG, Hye-Mi, Daejeon 34122 (KR); HAN, Min-Hee, Daejeon 34122 (KR)
(74) Representative: Plasseraud IP
(86) International application number: PCT/KR2024/096570
(87) International publication number: WO 2025/105934

(57) **Abstract**

The present disclosure relates to a battery pack including: a plurality of battery cells; a pack case configured to accommodate the plurality of battery cells; and a blocking member having a module cover configured to cover an outer side of the battery cells, and configured to guide discharges released from the battery cell to an outer space of the module cover.

## Description

### TECHNICAL FIELD

The present disclosure relates to a battery pack and a vehicle including the same.

This application is based on and claims priority from Korean Patent Application No. 10-2023-0159748, filed on November 17, 2023, with the Korean Intellectual Property Office, the disclosure of which is incorporated herein in its entirety by reference.

This application is based on and claims priority from Korean Patent Application No. 10-2024-0145821, filed on October 23, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Secondary batteries currently widely used include lithium-ion batteries, lithiumpolymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled at the appropriate temperature, unexpected ignition or explosion is more likely to occur. Therefore, if a thermal event such as thermal runaway occurs inside the battery pack including multiple battery modules, high-temperature gas or flame emitted from the battery cells therein may spread to adjacent battery modules, causing a chain reaction of explosions in the battery modules, which is very dangerous.

Therefore, it is necessary to develop a structure capable of quickly discharging high-temperature gas or flames generated inside a battery module to the outside when thermal runaway occurs in the battery module, thereby dissipating heat inside the battery module.

In addition, it is necessary to develop a structure capable of preventing gas or flames released in the event of thermal runaway in the battery module from flowing into other adjacent battery modules.

### DISCLOSURE

### Technical Problem

The present disclosure is designed to solve the problems of the related art, and therefore the present disclosure is directed to providing a battery pack capable of minimizing the thermal energy transferred to adjacent battery modules when thermal runaway occurs in a battery module to prevent or suppress thermal runaway propagation between the battery modules, thereby improving safety and reliability.

In addition, the present disclosure is also to provide a vehicle including such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; a pack case configured to accommodate the plurality of battery cells; and a blocking member having a module cover configured to cover an outer side of the battery cells, and configured to guide discharges released from the battery cell to an outer space of the module cover.

The battery pack may further include a module case configured to accommodate the plurality of battery cells by grouping them, and having at least one venting hole formed on one side thereof, and the module cover may be configured to cover one side of the module case where the venting hole is formed.

A plurality of module cases may be provided, and the module cover may be configured to cover the top of at least some of the plurality of module cases.

The module cover may be disposed to be spaced a predetermined distance apart from the module case.

The blocking member may include a stopper interposed between the module case and the module cover.

The stopper may be configured to define a distance between the module case and the module cover.

The module cover may be configured to be seated on the stopper.

The stopper may be disposed between the venting holes.

The stopper may be configured to extend in at least one direction.

The module cover may include an opening configured to be opened by pressure or heat to discharge the discharges to the outside.
wherein the blocking member may include a guide member extending in at least one direction and disposed on an outer side of the module cover.

A plurality of guide members may be provided to be spaced a predetermined distance apart from each other in a horizontal direction, and a venting path through which the discharges flow may be formed between the guide members.

The pack case may include a venting unit configured to discharge the discharges to an outside of the pack case, and the guide member may be configured to guide the discharges to the venting unit.

The guide member may be configured such that the flow area of the venting path is reduced, at least in part, as it gets closer to the venting unit.

A plurality of guide members may be provided to be spaced a predetermined distance apart from each other in the longitudinal direction.

In addition, the present disclosure also provides a battery pack including a battery module according to the present disclosure.

In addition, the present disclosure also provides a vehicle including a battery pack according to the present disclosure.

### Advantageous Effects

According to one aspect of the present disclosure, when thermal runaway occurs in a battery module, it is possible to minimize the thermal energy transferred to adjacent battery modules. Therefore, the propagation of thermal runaway may be prevented or suppressed between the battery modules, thereby ensuring the safety and reliability of the battery pack.

In addition, according to another aspect of the present disclosure, since high-temperature gas or flame is able to be quickly discharged to the outside of the battery pack, heat accumulated inside the battery pack may be dissipated.

In addition, according to another aspect of the present disclosure, when thermal runaway occurs in a battery module, it is possible to prevent high-temperature gas or flame discharged to the outside of the battery module from flowing back into another battery module.

In addition, according to another aspect of the present disclosure, it is possible to prevent or delay events due to thermal runaway of a battery pack or a device equipped with a battery pack, such as fire or explosion.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view of a battery pack according to an embodiment of the present disclosure.
FIG. 2 is a perspective view illustrating the inside of a battery pack according to an embodiment of the present disclosure.
FIG. 3 is an exploded perspective view of a battery pack according to an embodiment of the present disclosure.
FIG. 4 is a cross-sectional view of a battery pack according to an embodiment of the present disclosure, which may illustrate, for example, a cross-section taken along line I - I' in FIG. 2.
FIG. 5 is a drawing illustrating a battery pack to which a stopper is applied, when viewed from above, according to an embodiment of the present disclosure.
FIG. 6 is a drawing illustrating a battery pack to which a stopper is applied, when viewed from above, according to another embodiment of the present disclosure.
FIG. 7 is a drawing illustrating a module cover that is partially opened during thermal runaway in a battery pack according to an embodiment of the present disclosure.
FIG. 8 is a perspective view illustrating the inside of a battery pack to which a guide member is applied according to an embodiment of the present disclosure.
FIG. 9 is a cross-sectional view of a battery pack to which a guide member is applied according to an embodiment of the present disclosure.
FIG. 10 is a drawing illustrating a battery pack to which a guide member is applied, when viewed from above, according to an embodiment of the present disclosure.
FIG. 11 is a drawing illustrating a battery pack to which a guide member is applied, when viewed from above, according to another embodiment of the present disclosure.
FIG. 12 is a drawing illustrating a battery pack to which a guide member is applied, when viewed from above, according to another embodiment of the present disclosure.
FIG. 13 is a rear perspective view of a battery module included in a battery pack according to another embodiment of the present disclosure.
FIG. 14 is a cross-sectional view of a battery pack according to another embodiment of the present disclosure.
FIG. 15 is a perspective view illustrating a module cover included in a battery pack according to another embodiment of the present disclosure.
FIG. 16 is a drawing illustrating a battery pack to which a stopper is applied, when viewed from above, according to another embodiment of the present disclosure.
FIG. 17 is a drawing illustrating a battery pack to which a guide member is applied, when viewed from above, according to another embodiment of the present disclosure.
FIG. 18 is a drawing illustrating a battery pack to which a guide member is applied, when viewed from above, according to another embodiment of the present disclosure.
FIG. 19 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back directions are used in this specification, it is obvious to those skilled in the art to which the present disclosure pertains that these terms are only for convenience of explanation and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

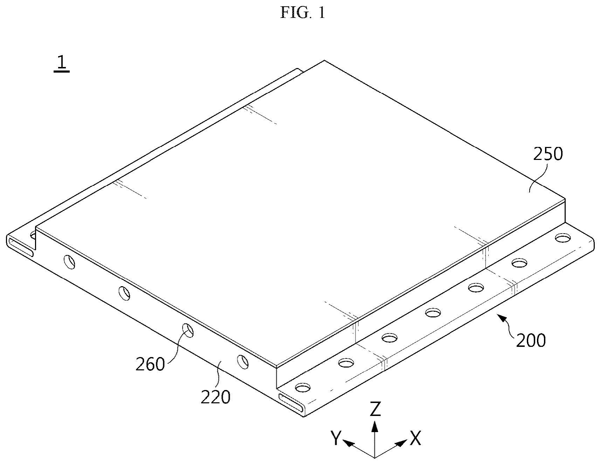

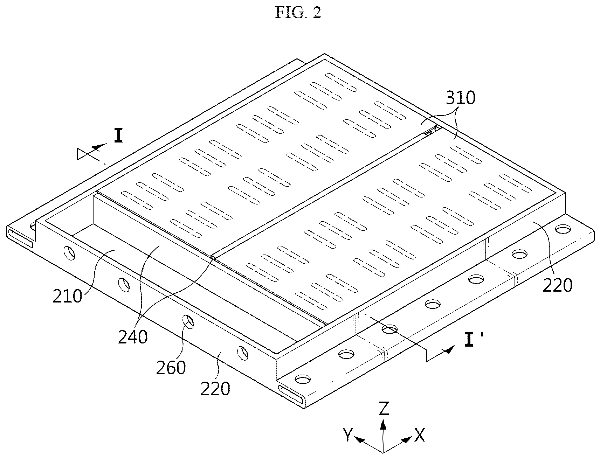

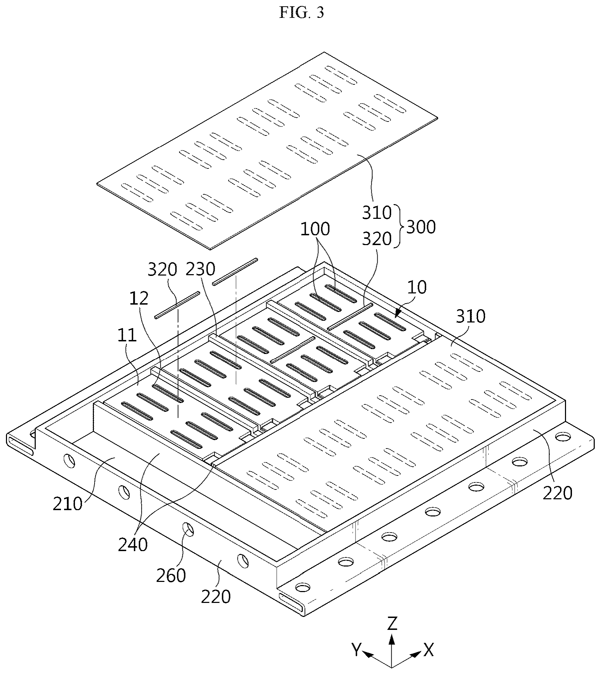

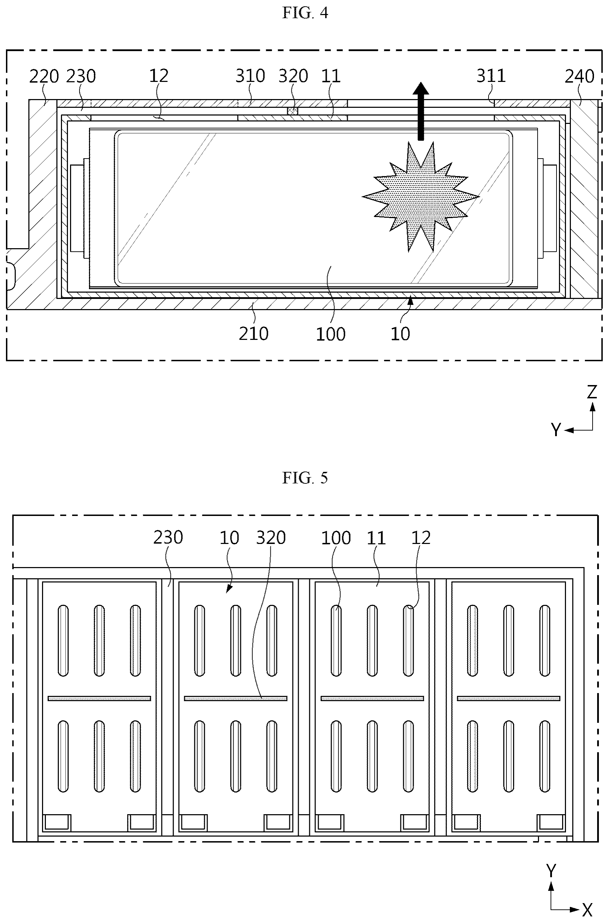

FIG. 1 is a perspective view of a battery pack according to an embodiment of the present disclosure, FIG. 2 is a perspective view illustrating the inside of a battery pack according to an embodiment of the present disclosure, and FIG. 3 is an exploded perspective view of a battery pack according to an embodiment of the present disclosure. In addition, FIG. 4 is a cross-sectional view of a battery pack according to an embodiment of the present disclosure, which may illustrate, for example, a cross-section taken along line I - I' in FIG. 2.

Referring to FIGS. 1 to 4, a battery pack 1 according to an embodiment of the present disclosure includes a battery cell 100, a pack case 200, and a blocking member 300.

Referring to FIG. 3, a plurality of battery cells 100 may be included. In addition, although not shown in the drawing, the plurality of battery cells 100 may include an electrode assembly, a cell case that accommodates the electrode assembly, and an electrode lead connected to the electrode assembly and extending outside the cell case to function as an electrode terminal. In this case, the plurality of battery cells 100 may be electrically connected to each other.

The battery cell 100 may be a pouch-type secondary battery. A cell case of the pouch-type secondary battery may be configured as a pouch in which a metal layer made of aluminum is interposed between polymer layers.

The plurality of battery cells 100 may be arranged side by side in the front-back direction (X-axis direction) while standing in the vertical direction (Z-axis direction), as shown in FIG. 3.

Meanwhile, the present disclosure is not limited to a specific type or shape of the battery cell 100, and various battery cells 100 known at the time of filing the present disclosure may be applied to the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to accommodate a plurality of battery cells 100. The pack case 200 may have an accommodation space formed to accommodate the plurality of battery cells 100. The accommodation space may be an empty space capable of accommodating the battery cells 100 therein.

The pack case 200 may be made of a material capable of securing mechanical strength, such as metal such as steel or SUS or plastic, or may include such a material in order to safely protect the battery cells 100 accommodated therein.

Meanwhile, referring to FIGS. 2 to 4, the battery pack 1 according to an embodiment of the present disclosure may include a blocking member 300. The blocking member 300 may be configured to separate the accommodation space of the battery module 10 from the external space of the pack case 200. That is, the blocking member 300 may be configured so that the discharges generated from the battery module 10 flows only in the outside of the battery module 10. Here, the discharges may indicate all substances discharged, such as venting gas, flame, or sparks, when a thermal event occurs in the battery module 10.

Specifically, the blocking member 300 may have a module cover 310. The module cover 310 may be configured to cover the outer side of the battery cell 100.

In particular, the module cover 310 may be configured to completely separate the accommodation space of the battery cells 100 from the outer space of the pack case 200. That is, the module cover 310 may be configured so that the discharges generated from the battery cell 100 flows only through the outside of the module cover 310.

This module cover 310 may be made of a material having excellent heat resistance and/or fire resistance, for example, mica.

Accordingly, the blocking member 300 may be configured to guide the discharges released from the battery cell 100 through the outer space of the module cover 310.

According to the above-implemented configuration of the present disclosure, even if a thermal event occurs, since the space for the battery cells 100 and the space through which the discharges flow are separated by the blocking member 300, the thermal damage directly to the battery cell 100 may be minimized.

In addition, the discharges discharged to the outer space of the module cover 310 may be prevented from flowing back into other battery cells 100. As a result, the heat transfer to other battery cells 100 may be minimized, so that the safety and reliability of the battery pack 1 may be guaranteed.

Meanwhile, referring to FIG. 3, the plurality of battery cells 100 may be modularized into one or more battery modules 10. That is, the battery pack 1 according to the present disclosure may include one or more battery modules 10. In addition, the plurality of battery cells 100 may be included as components of one or more battery modules 10. In this case, multiple battery cells 100 included in the battery module 10 may be electrically connected to each other.

Furthermore, a plurality of battery modules 10 may be provided inside the pack case 200. That is, the battery pack 1 according to the present disclosure may include multiple battery modules 10, and the plurality of battery cells 100 included in the battery pack 1 may be divided and included in the multiple battery modules 10, respectively.

The plurality of battery modules 10 may be disposed in at least one direction inside the pack case 200. For example, as shown in the embodiment in FIG. 3, the plurality of battery modules 10 may be arranged in four rows along the front-back direction of the pack case 200 and in two columns along the left-right direction of the pack case 200, so that a total of eight battery modules 10 may be provided.

In particular, the battery pack 1 according to the present disclosure may include a module case 11. The module case 11 may have an inner space formed therein, and may be configured to accommodate at least some of the plurality of battery cells 100 in the inner space. In particular, the module case 11 may be included in each battery module 10, thereby grouping the plurality of battery cells 100 into several battery modules 10, and may be a boundary that physically confines the inner space of each battery module 10.

In addition, although not shown in the drawing, the battery module 10 may include a bus-bar assembly and/or a module terminal electrically connected to the plurality of battery cells 100 accommodated inside.

A venting hole 12 may be formed on the module case 11. The venting hole 12 may be configured such that venting gas generated in the battery cells 100 accommodated inside the module case 11 is discharged to the outside of the module case 11.

Specifically, the venting hole 12 may enable directional venting in a specific direction. For example, as illustrated in FIG. 3, the venting hole 12 may be formed on the upper surface of the module case 11, and directional venting of the battery module 10 toward the top may be performed through the venting hole 12. A plurality of venting holes 12 may be provided at regular intervals in the horizontal direction (X-axis and Y-axis directions).

According to the above-implemented configuration of the present disclosure, if gas or the like is generated due to thermal runaway occurring in one of the battery cells 100, directional venting of the gas or the like may be quickly performed in a specific direction from the module case 11.

In addition, although not illustrated in the drawing, the battery module 10 may include a bus-bar assembly and/or module terminal electrically connected to the plurality of battery cells 100 accommodated therein.

As described above, the venting hole 12 provided on the upper surface of the module case 11 may be configured to discharge gas or flame generated inside the battery module 10 to the outside of the battery module 10 when thermal runaway occurs in the battery module 10. The remaining portion of the module case 11, excluding the venting holes 12, may be closed, and the gas or flame may be discharged in a straight line toward the venting holes 12.

According to the above-implemented configuration of the present disclosure, even if a thermal event occurs in any position inside the battery cell 100, the gas or flame generated in the battery cell 100 may be discharged to the outside of the battery module 10 through specific venting holes 12 provided on the upper surface of the battery cell 100, thereby ensuring effective venting.

The module cover 310 may be configured to cover one side of the module case 11. In particular, the module cover 310 may be configured to cover the outer surface of the module case 11 where the venting holes 12 are formed. For example, as shown in the embodiment in FIG. 3, in the case where the venting holes 12 are formed on the upper surface of the module case 11, the module cover 310 may be disposed at the top of the module case 11.

According to the above-implemented configuration of the present disclosure, the discharges released from the venting hole 12 of the battery module 10 may flow outside the module cover 310.

The module cover 310 may be configured to cover the top of at least some of the plurality of module cases 11. For example, the module cover 310 may be configured to cover the top of each module case 11. Alternatively, the module cover 310 may be configured to cover the entirety of the module cases 11 disposed in one direction. As shown in the embodiment in FIG. 2, the module cover 310 may be configured to cover the top of all the module cases 11 disposed in the front-back direction. That is, the module cover 310 may be configured to extend long enough to cover the area from one end of the stack of battery modules 10 disposed in one direction to the other end.

According to the above-implemented configuration of the present disclosure, the module cover 310 may guide the discharges to the outer side of the stack of battery modules 10 in the outer space of the module cover 310. In addition, according to the above-implemented configuration of the present disclosure, since the module cover 310 is provided to extend along the direction in which the battery modules 10 are disposed, the module cover 310 may clearly separate the inner space, in which the battery modules 10 are accommodated, from the outer space of the pack case 200. Therefore, it is possible to prevent the discharges released to the outer side of the module cover 310 from affecting the battery module 10.

Meanwhile, referring to FIG. 4, the module cover 310 may be disposed to be spaced a predetermined distance apart from the module case 11. For example, the module cover 310 may be disposed to be spaced a predetermined distance apart from the upper surface of the module case 11 so as to cover the upper surface of the module case 11 from the outside.

Specifically, the pack case 200 may have a cross-beam 230 configured to partition the battery modules 10 disposed in one direction inside the pack case 200. The cross-beam 230 may be configured to protrude further upward than the module case 11. In addition, the module cover 310 may be configured to be seated on the cross-beam 230. Therefore, the module cover 310 and the module case 11 may be disposed to be spaced a predetermined distance apart from each other.

According to the above-implemented configuration of the present disclosure, since the module cover 310 is spaced a predetermined distance apart from the module case 11, the module cover 310 may more reliably separate the accommodation space of the battery module 10 from the outer space. Therefore, even if venting gas or flame is emitted from a battery module 10, heat transfer to adjacent battery modules 10 may be suppressed. In addition, according to the above-implemented configuration of the present disclosure, since the module cover 310 is seated on and coupled to the cross-beam 230, the assembling of the battery pack 1 may be improved.

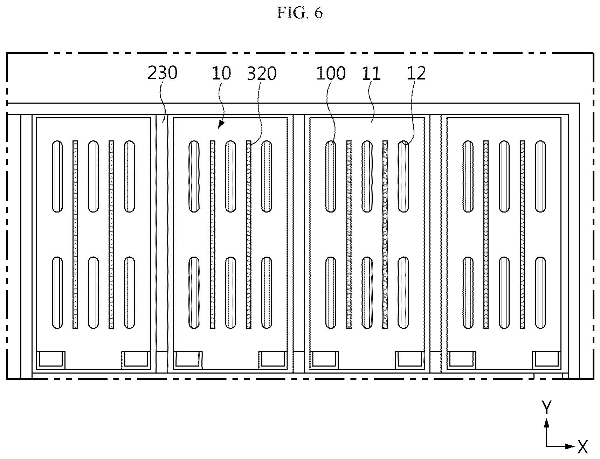

FIG. 5 is a drawing illustrating a battery pack to which a stopper is applied, when viewed from above, according to an embodiment of the present disclosure, and FIG. 6 is a drawing illustrating a battery pack to which a stopper is applied, when viewed from above, according to another embodiment of the present disclosure.

The blocking member 300 may include a stopper 320. The stopper 320 may be interposed between the module case 11 and the module cover 310. A plurality of stoppers 320 may be provided so that each battery module 10 is equipped with the same.

The stopper 320 may be configured to define the distance between the module case 11 and the module cover 310. When a thermal event occurs inside the battery module 10, the upper part of the battery module 10 may expand as the pressure inside the battery module 10 increases. In this case, the space between the upper surface of the module case 11 and the battery cell 100 may not remain constant, and thus directional venting through the venting holes 12 may not be performed smoothly.

However, according to the above embodiment of the present disclosure, since the stopper 320 is provided between the module case 11 and the module cover 310, the stopper 320 may pressurize and fix the battery module 10 from the top of the module case 11. Accordingly, the module case 11 may be prevented from expanding upward, so that directional venting of the discharges inside the battery module 10 may be smoothly performed to the outside through the venting holes 12.

Specifically, the stopper 320 may be provided so as to be seated on the top of the module case 11. In addition, the module cover 310 may be configured to be seated on the stopper 320. That is, the height of the stopper 320 may be configured to approximately correspond to the distance between the module cover 310 and the module case 11.

According to the above-implemented configuration of the present disclosure, since the stopper 320 structurally supports the module cover 310, the module cover 310 may be prevented from sagging by gravity. In addition, the module case 11 may be more reliably prevented from being lifted.

Meanwhile, the stopper 320 may be configured to prevent the discharges or flame discharged from the inside of the battery module 10 through the venting holes 12 from flowing back into the battery module 10 through other adjacent venting holes 12. The stopper 320 may be made of a material having fire resistance and/or heat resistance. For example, the stopper 320 may be made of a material such as silicone, polyurethane, or mica.

Specifically, the stopper 320 may be disposed between the venting holes 12. As described above, a plurality of venting holes 12 may be provided at regular intervals in the horizontal direction (X-axis and Y-axis directions).

As shown in the embodiment in FIG. 5, the stopper 320 may be provided between the venting holes 12 spaced apart from each other in the X-axis direction.

Meanwhile, referring to FIG. 5, the plurality of venting holes 12 may form a venting hole arrays disposed in one direction. The venting hole array may be formed by arranging the venting holes 12 in a row along the longitudinal direction (Y-axis direction in FIG. 5) of the battery cell 100.

According to the above-implemented configuration of the present disclosure, even if a thermal event occurs at any position of the battery cell 100, gas or flame generated in the battery cell 100 may be discharged to the outside of the battery module 10 through the venting holes 12 included in the venting hole array provided on the top of the battery cell 100.

In addition, a plurality of venting hole arrays may be provided side by side in one direction, that is, in the direction (X-axis direction in FIG. 5) in which the battery cells 100 are stacked. One venting hole array may be provided to correspond to at least one battery cell 100.

In this case, as shown in the embodiment in FIG. 6, the stopper 320 may be provided between the venting hole arrays. That is, the stopper 320 may be provided between the venting holes 12 spaced apart from each other in a direction horizontally perpendicular to the direction in which the battery cells 100 are stacked. According to the above-implemented configuration of the present disclosure, since the movement of discharges is blocked between the battery cells 100, thermal propagation between the battery cells 100 may be suppressed or delayed.

Furthermore, referring to FIGS. 5 and 6, the stopper 320 may be configured to extend in at least one direction. That is, the stopper 320 may be configured to extend in at least one direction between the venting holes 12. For example, the stopper 320 may be configured to extend in the stacking direction of the battery cells 100a or in a direction perpendicular to the stacking direction of the battery cells 100.

According to the above-implemented configuration of the present disclosure, since the stopper 320 is configured to cross the plurality of venting holes 12, the movement of the discharges may be blocked more reliably. In addition, the manufacturing process may be simplified compared to the case in which multiple stoppers 320 are provided in one battery module 10, thereby improving the productivity when manufacturing the battery pack 1.

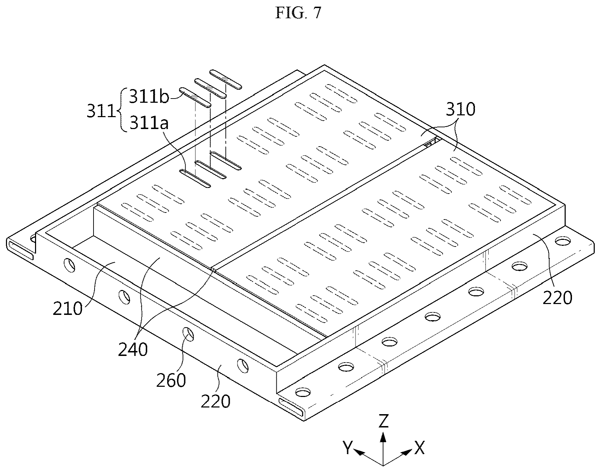

FIG. 7 is a drawing illustrating a module cover that is partially opened during thermal runaway in a battery pack according to an embodiment of the present disclosure.

Referring to FIG. 7, the module cover 310 may include an opening 311. The opening 311 may be configured to be opened by the pressure or heat of the discharges released from the battery cell 100. The opening 311 may be provided above the venting hole 12.

Specifically, in a normal state, the module cover 310 may cover the outer surface of the module case 11 having the venting holes 12 formed thereon, thereby protecting the battery module 10 and the battery cells 100. However, when a thermal event occurs so that venting gas or flame is generated in some battery cells 100, the opening 311 of the module cover 310 may be opened, so that the discharges may be smoothly discharged to the outer space of the module cover 310 without being obstructed through the venting hole 12 of the battery module 10.

According to the above-implemented configuration of the present disclosure, as the opening 311 is opened so that the venting hole 12 is exposed to the outside of the module cover 310, the discharges such as gas or flame may be completely discharged to the outside of the battery module 10.

In addition, according to the above-implemented configuration of the present disclosure, the module cover 310 may prevent the discharges, such as gas or flame, discharged to the outside from flowing back to the inside of the adjacent battery module 10. Therefore, since the thermal propagation to the neighboring battery modules 10 may be minimized, the thermal runaway propagation may be effectively prevented or delayed, thereby ensuring the safety and reliability of the battery module 10.

Specifically, the opening 311 may include a cover hole 311a formed in the main body of the module cover 310 and an opening member 311b provided in the cover hole 311a so as to be opened.

The opening member 311b may be configured to be separated or opened from the module cover 310 by the discharges released from the battery cell 100. As a result, the cover hole 311a may be opened, and the discharges released from the venting hole 12 may be discharged to the outside of the module cover 310 through the cover hole 311a.

For example, the opening 311 may have a notch formed along the perimeter of the cover hole 311a. In this case, the opening member 311b may be completely separated from the module cover 310, so that the cover hole 311a may be opened. Alternatively, the opening member 311b may be configured to have a slit or notch formed to be broken. In this case, only a part of the cover hole 311a may be opened.

Meanwhile, the opening 311 may be configured to at least partially face the venting hole 12. That is, the opening 311 may be configured to face at least some of the plurality of venting holes 12. In particular, the opening 311 may be disposed to respectively correspond to each venting hole 12.

According to the above-implemented configuration of the present disclosure, the discharge pressure of the discharges discharged in a straight line through the venting hole 12 may act on the opening 311 to directly push the opening 311 in the discharge direction of the discharges, thereby opening the cover hole 311a. Therefore, when the discharges are discharged from a certain venting hole 12, only the cover hole 311a of the opening 311 provided above to face the venting hole 12 may be configured to be opened. Accordingly, the discharges may be discharged more quickly to the outer space of the module cover 310 through the cover hole 311a.

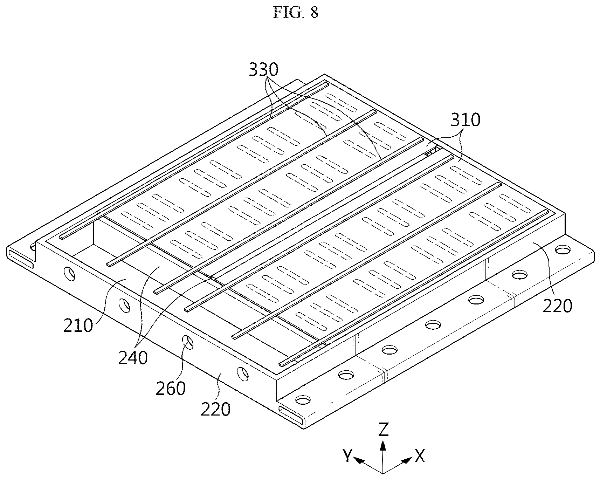

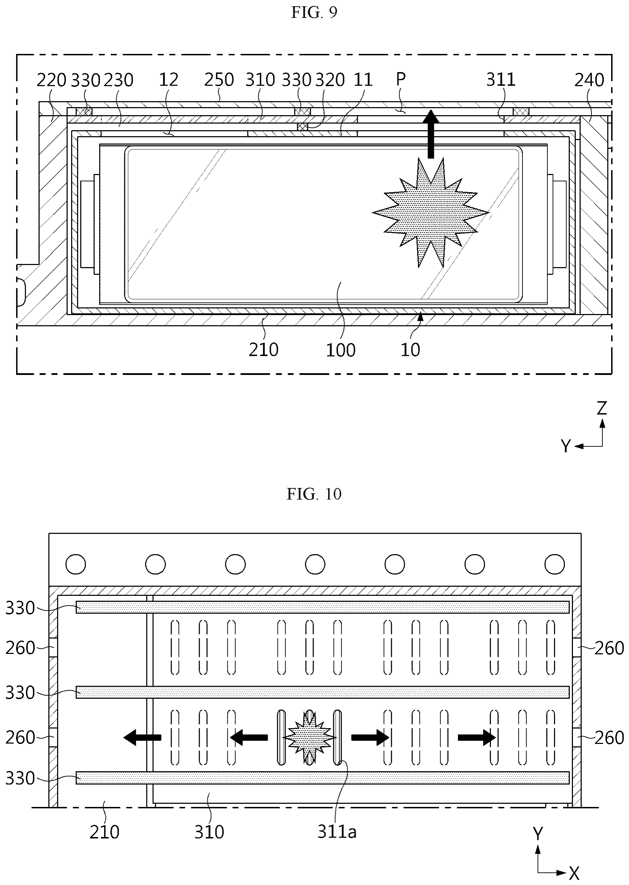

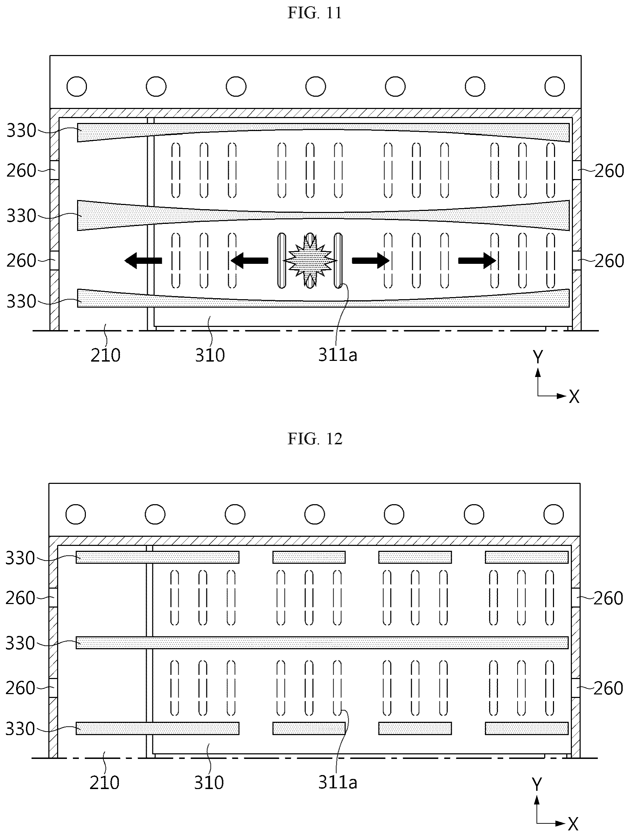

FIG. 8 is a perspective view illustrating the inside of a battery pack to which a guide member is applied according to an embodiment of the present disclosure, FIG. 9 is a cross-sectional view of a battery pack to which a guide member is applied according to an embodiment of the present disclosure, and FIG. 10 is a drawing illustrating a battery pack to which a guide member is applied, when viewed from above, according to an embodiment of the present disclosure. In addition, FIG. 11 is a drawing illustrating a battery pack to which a guide member is applied, when viewed from above, according to another embodiment of the present disclosure.

Referring to FIGS. 8 to 11, the blocking member 300 may include a guide member 330. The guide member 330 may be disposed on the outer side of the module cover 310. That is, the guide member 330 may be provided between the upper surface of the pack case 200 and the module cover 310.

The guide member 330 may be configured to guide the discharges flowing in the outer space of the module cover 310. The guide member 330 may be made of a material having fire resistance and/or heat resistance. For example, the guide member 330 may be made of a material such as silicone, polyurethane, or mica.

The guide member 330 may be configured to extend in at least one direction. For example, as shown in the embodiment in FIG. 6, the guide member 330 may be configured to extend along the stacking direction of the plurality of battery modules 10. That is, the guide member 330 may be configured to extend along the front-back direction of the battery pack 1.

In particular, the guide member 330 may be configured to extend from one end of the stack of battery modules 10 to the other end. That is, the guide member 330 may be configured to overlap at least some of the plurality of battery modules 10. In this case, one end of the guide member 330 may extend to the outside of the stack of battery modules 10. According to the above-implemented configuration of the present disclosure, the guide member 330 may entirely guide the discharges flowing above the plurality of battery modules 10.

A plurality of guide members 330 may be provided. The plurality of guide members 330 may be disposed to be spaced a predetermined distance apart from each other in the horizontal direction. In this case, a venting path P may be formed between adjacent guide members 330 so as to allow the discharges to flow. That is, the venting path P may be formed in the outer space of the module cover 310. The venting path P may be formed in a space surrounded by the pack case 200, the guide member 330, and the module cover 310. The venting path P may be configured to extend in the front-back direction in which the guide member 330 extends. In this case, the guide member 330 may be configured to block the discharges from moving to another venting path P.

Therefore, the guide member 330 may guide the discharges flowing in at least one direction through the venting path P in the outer space of the module cover 310, thereby smoothly discharging the same to the outside of the pack case 200.

Meanwhile, referring to FIG. 8, the pack case 200 according to an embodiment of the present disclosure may include a base frame 210 and a side frame 220.

The base frame 210 may form the bottom surface of the pack case 200 and may be configured in the form of a quadrangular plate. In addition, the base frame 210 may be configured so that a plurality of battery cells 100 are seated on the upper surface thereof. Furthermore, the base frame 210 may be configured to have a flat upper surface so that a plurality of battery modules 10 are stably seated thereon.

The side frame 220 may extend upward from respective edges of the base frame 210. The side frame 220 may have a plurality of unit walls to surround a plurality of battery cells 100 or battery modules 10. More specifically, the plurality of side frames 220 may include a right wall located at an end of the base frame 210 in the -Y-axis direction, a rear wall located at an end in the +X-axis direction, a left wall located at an end in the +Y-axis direction, and a front wall located at an end in the -X-axis direction, thereby forming the side surfaces of the pack case 200.

A pack lid 250 may be configured to cover the top of the plurality of battery modules 10. The pack lid 250 may be configured to cover the upper opening of the pack case 200. The pack lid 250 may be coupled to the side frame 220. The pack lid 250 may protect the components, such as the battery module 10, stored inside the pack case 200 and prevent the discharges released from the battery module 10 from moving to the outside of the pack case 200, in particular, to the top thereof.

In addition, the pack case 200 may have a venting unit 260. The venting unit 260 may be configured to discharge the discharges generated from the battery module 10 to the outside of the pack case 200. The venting unit 260 may be configured in the form of a hole passing through the pack case 200 from the inside to the outside. Alternatively, the venting unit 260 may be configured as a venting device that is mounted in a hole of the pack case 200 and operates when discharges are generated inside the pack case 200.

The venting unit 260 may be provided on the side surface of the pack case 200, i.e., on the side frame 220. A plurality of venting units 260 may be provided. The venting unit 260 may be located on at least some of the unit walls constituting the side frame 220. In addition, each venting unit 260 may be formed on two or more unit walls, or two or more venting units 260 may be formed on one unit wall. For example, referring to FIG. 8, a plurality of venting units 260 may be provided on the front wall and the rear wall, respectively. In addition, a plurality of venting units 260 may be provided symmetrically with respect to the central axis of the side frame 220.

According to the above-implemented configuration of the present disclosure, when the battery cell 100 is in an abnormal state, high-temperature gas or the like may be discharged in both directions of the pack case 200, so that it is easy to discharge the gas more quickly to the outside of the pack case 200.

Meanwhile, the number of installations or locations of the venting units 260 described in the embodiment in FIG. 8 are only examples, and may be changed to various other numbers or locations.

Meanwhile, the pack case 200 may further include a center beam 240 and a cross-beam 230. The center beam 240 and the cross-beam 230 may be provided to partition a plurality of battery modules 10. For example, the center beam 240 may be formed as a partition extending in the front-back direction, and may be interposed between the battery modules 10 that are adjacently disposed in the left-right direction. In addition, the cross-beam 230 may be formed as a partition extending in the left-right direction and may be interposed between battery modules 10 that are adjacently disposed in the front-back direction.

According to this implemented configuration, heat or flame may be prevented from directly moving between the battery modules 10 whose storage spaces are separated by the center beam 240 and the cross-beam 230.

Meanwhile, a plurality of guide members 330 may be provided symmetrically with respect to the center beam 240. A plurality of guide members 330 may be provided between the center beam 240 and the side frames 220. For example, as shown in the embodiment in FIG. 8, three guide members 330 may be provided between the center beam 240 and the both side frames 220, respectively.

The guide member 330 may be configured to guide the discharges to the venting unit 260. For example, the guide member 330 may be provided to extend toward the venting unit 260. Accordingly, the discharges, such as the venting gas, moving through the venting path P between the guide members 330 may be headed to the venting unit 260. In this case, according to an embodiment of the present disclosure, as shown in the embodiment in FIG. 10, the plurality of guide members 330 may be provided in parallel to each other so that the gap between the guide members 330 becomes constant.

According to the above-implemented configuration of the present disclosure, when a thermal event occurs in the battery module 10, the guide members 330 may guide the discharges inside the venting path P toward the venting unit 260, thereby quickly discharging the discharges to the outside of the pack case 200. This prevents the internal pressure inside the pack case 200 from increasing and prevents additional chain ignition of other battery modules 10.

In addition, as another embodiment of the present disclosure, referring to FIG. 11, the guide members 330 may be configured such that the flow area of the venting path P is reduced, at least in part, as it gets closer to the venting unit 260. Specifically, the guide member 330 may include a portion configured such that the gap of the venting path P becomes narrower as it gets closer to the venting unit 260.

According to the above-implemented configuration of the present disclosure, the guide member 330 may more effectively guide the discharges inside the venting path P in the direction toward the venting unit 260. Accordingly, the discharges may be smoothly discharged to the outside of the battery pack 1 through the venting unit 260, thereby suppressing or preventing thermal runaway between the battery modules 10.

Meanwhile, referring to FIG. 8, the guide member 330 may be coupled and fixed to the cross-beam 230. Specifically, the module cover 310 may be seated on the cross-beam 230, and the guide member 330 may be seated on the module cover 310, so that the guide member 330, the module cover, and the cross-beam 230 may be coupled to each other from the top of the guide member 330 by a coupling member such as a bolt or the like.

According to the above-implemented configuration of the present disclosure, the coupling configuration between the blocking member 300 and the pack case 200 may be attained with a simple structure. Furthermore, according to the above-implemented configuration of the present disclosure, since the module cover 310 is manufactured to be seated on the cross-beam 230 in advance, when the guide member 330 is coupled to the top of the cross-beam 230, the blocking member 300 may be automatically coupled to the cross-beam 230. Therefore, the time and cost for manufacturing the battery pack 1 may be reduced, thereby improving productivity. In addition, since the blocking member 300 is stably fixed between the cross-beam 230 and the pack lead 250, the rigidity of the battery pack 1 may be further secured.

FIG. 12 is a drawing illustrating a battery pack to which a guide member is applied, when viewed from above, according to another embodiment of the present disclosure.

As another embodiment, referring to FIG. 12, a plurality of guide members 330 may be provided so as to be spaced a predetermined distance apart from each other in the longitudinal direction. That is, the guide member 330 may be formed to be discontinuous, instead of extending continuously from one end to the other. In particular, a plurality of guide members 330 provided outside the opening 311 may be disposed to be spaced a predetermined distance apart from each other in the longitudinal direction.

Accordingly, heat may be dispersed into the space between adjacent guide members 330 disposed in the longitudinal direction. In addition, the guide member 330 provided between the openings 311 may be configured to extend continuously, thereby separating the venting paths P on both sides.

According to the above-implemented configuration of the present disclosure, the guide member 330 may guide the discharges inside the venting path P toward the venting unit 260 and disperse the heat inside the venting path P. As a result, heat accumulation between the module cover 310 and the pack lid 250 may be minimized.

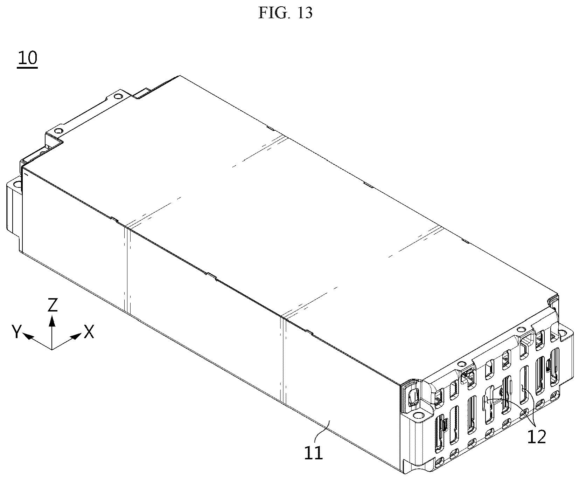

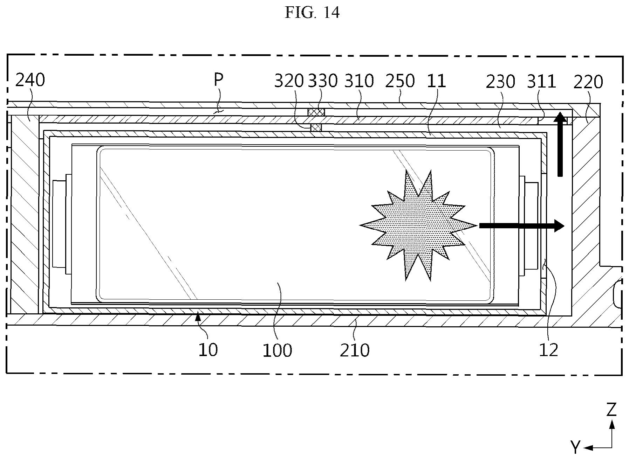

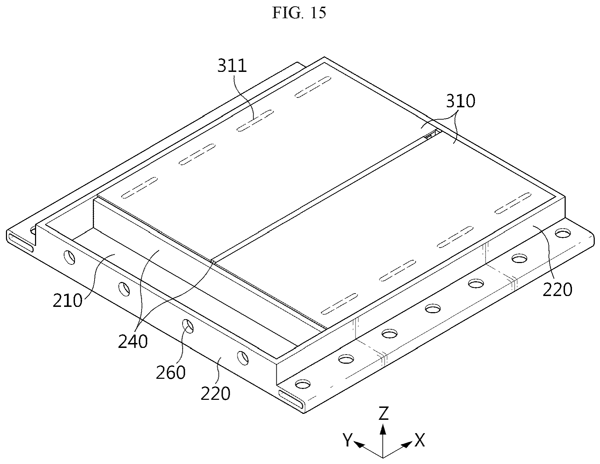

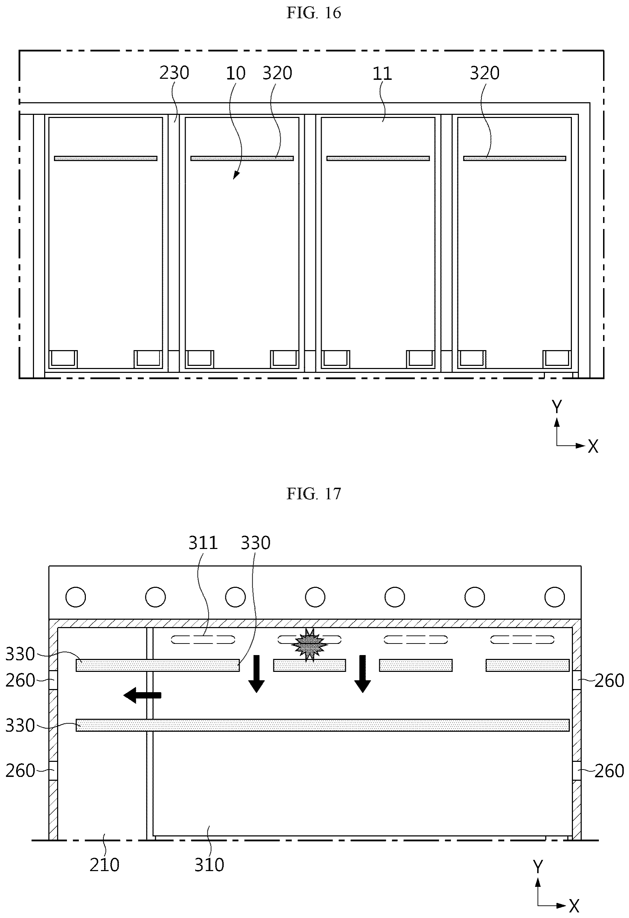

FIG. 13 is a rear perspective view of a battery module included in a battery pack according to another embodiment of the present disclosure. FIG. 14 is a cross-sectional view of a battery pack according to another embodiment of the present disclosure. FIG. 15 is a perspective view illustrating a module cover included in a battery pack according to another embodiment of the present disclosure. In addition, FIG. 16 is a drawing illustrating a battery pack to which a stopper is applied, when viewed from above, according to another embodiment of the present disclosure.

Referring to FIG. 13, a venting hole 12 may be formed on the rear side of a battery module 10. The rear side of the battery module 10 may indicate the opposite side of a module terminal of the battery module 10. In addition, in this case, a plurality of battery modules 10 may be disposed inside the pack case 200 so that the module terminal is directed to the inside of the pack case 200. The venting hole 12 may be disposed to be directed to the outside of the pack case 200.

For example, referring to the bold arrows illustrated in FIG. 14, when a thermal event occurs in a battery module 10, venting gas or flame may be discharged through the venting hole 12 provided on the rear side of the battery module 10. Accordingly, when a thermal event occurs in the battery module 10, venting gas or flame may be prevented from moving toward the module terminal of the battery module 10. In addition, thermal damage to other battery modules 10 may be minimized.

In this case, referring to FIG. 14 and FIG. 15, the module cover 310 may be configured such that an outer portion thereof is at least partially open. A portion of the module cover 310 may be configured to be open so that the discharges released from the venting hole 12 provided on the rear side of the battery module 10 may move to the outer side of the module cover 310. For example, the left and right edges of the module cover 310 may be configured to be spaced a predetermined distance apart from the left and right side frames 220. Accordingly, the discharges may move from the rear side of the battery module 10 to the outer side of the module cover 310.

Alternatively, as shown in the embodiment in FIG. 15, the openings 311 of the module cover 310 may be provided on the side of the battery module 10 where the venting hole 12 is provided. For example, the openings 311 may be disposed along the outer edge of the module cover 310.

According to the above-implemented configuration of the present disclosure, since the opening 311 is provided on the side where the venting hole 12 is located, the discharges such as gas or flame may be quickly discharged to the outside of the module cover 310.

In addition, referring to FIG. 16, the stopper 320 may be configured to guide the discharges released from the battery module 10 directly to the outside of the module cover 310. For example, as shown in the embodiment in FIG. 16, the stopper 320 may be provided on the rear side of the battery module 10. In addition, the stopper 320 may be configured to suppress the discharges from moving beyond the stopper 320 to the inside of the battery module 10.

According to the above-implemented configuration of the present disclosure, the discharges discharged through the venting hole 12 may be directed to the outside of the module cover 310 by the stopper 320. In addition, the discharges may be suppressed from moving toward the module terminal by the stopper 320.

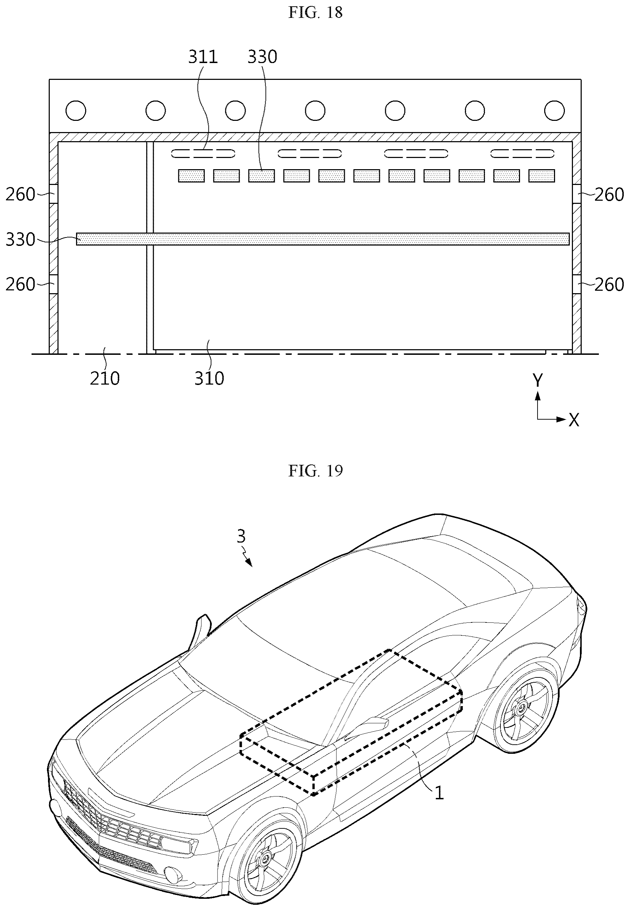

FIGS. 17 and 18 are drawings illustrating a battery pack to which a guide member is applied, respectively, when viewed from above, according to another embodiment of the present disclosure.

In the case where a venting hole 12 is provided on the rear side of the battery module 10, the guide member 330 may be provided further inward than the openings 311, as shown in the embodiments in FIGS. 17 and 18. In addition, a plurality of guide members 330 may be provided so as to be spaced a predetermined distance apart from each other in the longitudinal direction. That is, the guide member 330 may be configured to be discontinuous, instead of extending continuously, from one end to the other.

Accordingly, when a thermal event occurs in the battery module 10, the discharges discharged from the open opening 311 may pass through the space between adjacent guide members 330 disposed in the longitudinal direction and move to the venting path P.

According to the above-implemented configuration of the present disclosure, the discharges moving to the outside of the module cover 310 may move to the inside of the venting path P by the guide member 330. In addition, since these discharges may be guided toward the venting unit 260, the discharges may be quickly discharged to the outside of the pack case 200.

In addition, the guide member 330 may be provided on the inner side of the module cover 310 so as to extend continuously. As a result, the discharges may be further suppressed from moving beyond the center beam 240 to the other battery modules 10.

According to the above-implemented configuration of the present disclosure, when thermal runaway occurs in the battery module 10, the thermal energy transferred to the adjacent battery modules 10 may be minimized. Therefore, the thermal runaway propagation between the battery modules 10 may be prevented or suppressed, thereby ensuring the safety and reliability of the battery pack 1.

FIG. 19 is a schematically perspective view of a vehicle including a battery pack according to an embodiment of the present disclosure.

Referring to FIG. 19, a vehicle 3 according to an embodiment of the present disclosure may include one or more battery packs 1 according to an embodiment of the present disclosure. The vehicle 3 according to the present disclosure may be, for example, an electric vehicle, a hybrid vehicle, or a plug-in hybrid vehicle. The vehicle 3 includes a four-wheel vehicle and a two-wheel vehicle. The vehicle 3 may be operated by power supplied from the battery pack 1 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a plurality of battery cells;
a pack case configured to accommodate the plurality of battery cells; and
a blocking member having a module cover configured to cover an outer side of the battery cells, and configured to guide discharges released from the battery cell to an outer space of the module cover.

2. The battery pack according to claim 1,
further comprising a module case configured to accommodate the plurality of battery cells by grouping them, and having at least one venting hole formed on one side thereof,
wherein the module cover is configured to cover one side of the module case where the venting hole is formed.

3. The battery pack according to claim 2,
wherein a plurality of module cases are provided, and
wherein the module cover is configured to cover at least some of the plurality of module cases.

4. The battery pack according to claim 2,
wherein the module cover is disposed to be spaced a predetermined distance apart from the module case.

5. The battery pack according to claim 2,
wherein the blocking member comprises
a stopper interposed between the module case and the module cover.

6. The battery pack according to claim 5,
wherein the stopper is configured to define a distance between the module case and the module cover.

7. The battery pack according to claim 5,
wherein the module cover is configured to be seated on the stopper.

8. The battery pack according to claim 5,
wherein the stopper is disposed between the venting holes.

9. The battery pack according to claim 5,
wherein the stopper is configured to extend in at least one direction.

10. The battery pack according to claim 1,
wherein the module cover comprises an opening configured to be opened by pressure or heat to discharge the discharges to the outside.

11. The battery pack according to claim 1,
wherein the blocking member comprises a guide member extending in at least one direction and disposed on an outer side of the module cover.

12. The battery pack according to claim 11,
wherein a plurality of guide members are provided to be spaced a predetermined distance apart from each other in a horizontal direction, and
wherein a venting path through which the discharges flow is formed between the guide members.

13. The battery pack according to claim 12,
wherein the pack case comprises a venting unit configured to discharge the discharges to an outside of the pack case, and
wherein the guide member is configured to guide the discharges to the venting unit.

14. The battery pack according to claim 13,
wherein the guide member is configured such that the flow area of the venting path is reduced, at least in part, as it gets closer to the venting unit.

15. The battery pack according to claim 11,
wherein a plurality of guide members are provided to be spaced a predetermined distance apart from each other in the longitudinal direction.

16. A vehicle comprising a battery pack according to any one of claims 1 to 15.
